# EUROPÄISCHE PATENTSCHRIFT

(11) **EP 2 852 795 B1**
(45) Veröffentlichungstag und Bekanntmachung des Hinweises auf die Patenterteilung: **24.06.2020**
(21) Anmeldenummer: 13716775.5
(22) Anmeldetag: 12.04.2013
(51) Int. Cl.: F24H 1/10, F24H 9/00, B60H 1/22, H05B 6/10, F24H 1/00

(54) **VORRICHTUNG ZUM ELEKTRISCHEN AUFHEIZEN**
DEVICE FOR ELECTRICAL HEATING
DISPOSITIF ÉLECTRIQUE DE MISE EN TEMPERATURE

(30) Priorität: 20.04.2012 DE 102012206603
(43) Veröffentlichungstag der Anmeldung: 01.04.2015
(73) Patentinhaber: MAHLE Behr GmbH & Co. KG, 70469 Stuttgart (DE); Behr-Hella Thermocontrol GmbH, 59557 Lippstadt (DE)
(72) Erfinder: KOHL, Michael, 74321 Bietigheim-Bissingen (DE); PANKRATZ, Harri, 59505 Bad Sassendorf (DE); TRAPP, Ralph, 33102 Paderborn (DE)
(74) Vertreter: Grauel, Andreas
(86) Internationale Anmeldenummer: PCT/EP2013/057681
(87) Internationale Veröffentlichungsnummer: WO 2013/156404

(56) Entgegenhaltungen:
- WO-A1-2008/007819
- DE-A1-102008 056 991
- KR-B1- 100 956 582
- US-A- 5 334 819

## Beschreibung

### Technisches Gebiet

Die Erfindung betrifft eine Vorrichtung zum elektrischen Aufheizen eines Fluids in einem elektrisch betriebenen Kraftfahrzeug, mit einer Induktionsspule, welche in einen Schwingkreis integriert ist und ein magnetisches Wechselfeld erzeugt, und mindestens einem ersten Induktor, welcher innerhalb des magnetischen Wechselfeldes positioniert ist. Das Dokument DE 10 2008 056 991 A1 offenbart eine Vorrichtung mit den Merkmalen des Oberbegriffs des Anspruchs 1.

### Stand der Technik

Heutzutage werden mit Verbrennungsmotoren betriebene Fahrzeuge zumeist dadurch beheizt, indem ein Fluid, welches meist ein Wasser-Glykol-Gemisch ist, beheizt wird. Das Fluid, welches in erster Hinsicht zur Kühlung des Verbrennungsmotors gedacht ist, wird nachdem es Wärme des Verbrennungsmotors aufgenommen hat, durch einen Wasser-Luft Wärmeübertrager geleitet. Die Luft, welche als kühlendes Fluid den Wasser-Luft Wärmeübertrager umströmt nimmt hierbei Wärmeenergie von dem Kühlfluid auf. Das Kühlfluid wird hierdurch abgekühlt und die Luft erwärmt. Die erwärmte Luft wird im Folgenden in den Innenraum des Fahrzeugs geleitet und damit zur Temperierung des Innenraumes eingesetzt.

Bei Fahrzeugen ohne Verbrennungsmotor oder bei hocheffizienten Dieselmotoren, fehlt die Motorabwärme oder sie reicht nicht aus, um die Fahrzeugkabine entsprechend des Fahrerwunsches ausreichend zu erwärmen. Um dies zu umgehen, werden derzeit elektrische Heizungen verwendet, die elektrische Energie in Wärme umwandeln. Hier gibt es im Wesentlichen zwei Alternativen. Bei der ersten Ausführungsform wird die in den Innenraum strömende Luft direkt von einem elektrischen Zuheizer erwärmt. Solche Ausführungen sind etwa aus der EP 1 935 684 A1 bekannt.

Der Zuheizer wird hierzu in einem Bereich der Innenraumluftansaugung derart positioniert, dass die Luft, bevor sie in den Innenraum geleitet wird, mit dem elektrischen Zuheizer in Kontakt kommt und so Wärme aufnimmt. Oft werden die Zuheizer direkt in der Nähe oder an dem Wärmeübertrager selbst, der zur Aufheizung des Luftstroms mittels des erhitzten Kühlwassers aus dem Verbrennungsmotor vorgesehen ist, angebracht. Hierzu entsteht ein zusätzlicher Teileaufwand und zusätzlich sind die meist verwendeten PTC-Keramikelemente recht schwer.

Als zweite Alternative sind elektrische Wasserheizer bekannt, die zunächst ein Fluid, wie etwa das für die Kühlung des Verbrennungsmotors verwendete Wasser-Glykol-Gemisch, aufheizen. Das aufgeheizte Fluid wird dann durch einen zusätzlichen Wasser-Luft Wärmeübertrager geleitet, wodurch die den Wärmeübertrager umströmende Luft erwärmt wird.

Das Prinzip funktioniert analog der Erwärmung von Luft, wie sie etwa in verbrennungsmotorgetriebenen Fahrzeugen stattfindet, mit dem Unterschied, dass das Wasser-Glykol-Gemisch hier elektrisch erwärmt wird und nicht durch die Abwärme des Verbrennungsmotors.

Nachteilig bei diesem Verfahren ist insbesondere der benötigte Wasserkreislauf für das Wasser-Glykol-Gemisch und die zusätzlichen Komponenten wie etwa Wasserpumpe, Rohrleitungen und Ventile.

Allerdings ermöglicht ein Wasserkreislauf auf relativ einfache Weise auch die Ausnutzung von verschiedenen Abwärmequellen, wie Elektromotor, Batterie oder Leistungselektroniken, die bei Elektrofahrzeugen aktiv gekühlt werden müssen, was den Einsatz von Kühlwasserkreisläufen wiederum nahe legt.

Gerade vor dem Hintergrund der Reichweitendiskussion bei nur begrenzter Batteriekapazität ist die Wasserheizung bei Elektrofahrzeugen eine häufig eingesetzte Technik. Ferner kann eine Wasserheizung im Motorraum angebracht werden, sodass keine Hochvoltkomponente im Fahrgastraum verbaut werden muss, was bei einigen Fahrzeugherstellern ein Sicherheitsproblem darstellt.

Elektrische Wasserheizungen werden derzeit realisiert, indem ein oder mehrere Heizelemente in das Fluid ragen und die Wärme an das Fluid abgeben. Diese Elemente können einfache Heizwendel aus Metall oder auch sogenannte PTC-Steine/Keramiken sein. Vorteilhaft bei der Verwendung von PTC-Keramiken ist die Tatsache, dass sie aufgrund der Temperaturabhängigkeit ihres Widerstandes (PTC = Positiver Temperaturkoeffizient) eine gewisse Eigensicherheit hinsichtlich Überhitzung aufweisen.

Ein grundsätzlicher Nachteil bei der Verwendung einer solchen Wasserheizung besteht darin, dass die verwendeten Heizelemente zum Fluid, welches sie erwärmen sollen, elektrisch isoliert sein müssen. Diese Forderung macht den Einsatz solcher Techniken teuer und wirkt sich außerdem negativ auf den Wirkungsgrad und die Ansprechgeschwindigkeit der Heizelemente aus.

### Darstellung der Erfindung, Aufgabe, Lösung, Vorteile

Daher ist es die Aufgabe der vorliegenden Erfindung, eine Lösung bereitzustellen, die es ermöglicht, ein Fluid durch direkten Kontakt mit einem Heizelement, ohne zusätzliche elektrische Isolation zu erwärmen, die Effizienz der Wärmeübertragung an das Fluid zu erhöhen und den benötigten Teileaufwand und damit die Kosten für ein solches System zu reduzieren.

Die Aufgabe der vorliegenden Erfindung wird durch eine Anordnung mit den Merkmalen gemäß Anspruch 1 gelöst. Vorteilhafte Weiterbildungen der vorliegenden Erfindung sind in den Unteransprüchen definiert.

Es wird eine Vorrichtung zum elektrischen Aufheizen eines Fluids in einem elektrisch betriebenen Kraftfahrzeug geschaffen, wobei mindestens ein erster Induktor mittels eines magnetischen Wechselfelds erwärmbar ist, welcher innerhalb des magnetischen Wechselfeldes positionierbar ist, wobei der Induktor im Inneren eines Moduls angeordnet ist, welches mit einem zu erwärmenden Fluid durchströmbar ist.

Dabei ist es vorteilhaft, wenn eine Induktionsspule elektrisch in einem Schwingkreis integriert ist und die Induktionsspule räumlich außerhalb des Moduls angeordnet ist.

Weiterhin vorteilhaft ist es, wenn der Induktor zur Erzeugung einer turbulenten Umströmung und/oder Durchströmung Oberflächenelemente, und/oder Bohrungen, und/oder Stanzungen aufweist oder wenn der Induktor zur Erzeugung einer turbulenten Umströmung eine durch Umformung, insbesondere durch Prägung und/oder Sickung, und/oder durch Urformung und/oder durch spanende Verformung geeignete Oberflächen aufweist. Durch eine turbulente Strömung kann der Wärmeübergang zwischen dem Induktor und dem Fluid deutlich erhöht werden.

Zu bevorzugen ist es außerdem, wenn das Modul teilbar ist. Hierdurch wird die Herstellung des Moduls stark vereinfacht.

Erfindungsgemäß weisen das Gehäuseunterteil und das Gehäuseoberteil im Inneren jeweils eine mittig verlaufende Trennwand auf, welche das Gehäuseoberteil bzw. das Gehäuseunterteil in jeweils einen ersten Strömungskanal und einen zweiten Strömungskanal unterteilt, wobei der erste Strömungskanal des Gehäuseoberteils bzw. des Gehäuseunterteils mit einem Zu- bzw. Ablauf des ersten Moduls in Fluidkommunikation steht und der zweite Strömungskanal des Gehäuseoberteils mit dem zweiten Strömungskanal des Gehäuseunterteils in Fluidkommunikation steht. Der Induktor wird so in mehreren Bereichen von dem Fluid umströmt und somit ist die Kontaktzeit zwischen dem Fluid und dem Induktor höher, als bei einer einfachen Umströmung mit nur einem Strömungskanal.

Weiterhin vorteilhaft ist es, wenn der Induktor mit den Wandungen des ersten und des zweiten Strömungskanals des Gehäuseoberteils bzw. des Gehäuseunterteils fluiddicht abschließt und das Innere des Moduls in einen oberen und einen unteren Bereich unterteilt. Dies erzeugt eine Trennung in jeweils zwei Strömungskanäle im unteren Bereich und zwei Strömungskanäle im oberen Bereich, was wieder der Kontaktzeit zwischen dem Fluid und dem Induktor zu Gute kommt.

Außerdem zu bevorzugen ist es, wenn der Induktor eine Durchtrittsöffnung aufweist, worüber der zweite Strömungskanal des oberen Bereichs des Moduls mit dem zweiten Strömungskanal des unteren Bereichs des Moduls in Fluidkommunikation steht. Hierdurch wird der Fluidübergang zwischen dem oberen und dem unteren Bereich ermöglicht, was erst eine Gesamtdurchströmung des Moduls ermöglicht.

In einer weiteren erfindungsgemäßen Ausführungsform ist es vorteilhaft, wenn der erste Strömungskanal des Gehäuseunterteils mit dem zweiten Strömungskanal des Gehäuseunterteils, sowie der erste Strömungskanal des Gehäuseoberteils mit dem zweiten Strömungskanal des Gehäuseoberteils über Verbindungen in Fluidkommunikation steht.

Weiterhin vorteilhaft ist es, wenn der Strömungsweg des Fluids über einen Stutzen in das Modul, in den ersten Strömungskanal des Gehäuseunterteils, in den zweiten Strömungskanal des Gehäuseunterteils durch die Durchtrittsöffnung des Induktors, in den zweiten Strömungskanal des Gehäuseoberteils, in den ersten Strömungskanal des Gehäuseoberteils und abschließend durch einen Stutzen aus dem Modul heraus, oder in umgekehrter Richtung verläuft.

In einer alternativen Ausführungsform ist es vorteilhaft, wenn mit dem Induktor mindestens eine Turbulenzeinlage in dem Modul angeordnet ist. Für den Fall, dass der Induktor selbst keine Mittel aufweist, die eine turbulente Strömung erzeugen, bzw. die Oberfläche des Induktors nicht in einer geeigneten Form ausgeführt ist, hilft eine zusätzliche Turbulenzeinlage eine turbulente Strömung zu erzeugen um einen verbesserten Wärmeübergang zwischen Induktor und Fluid zu erzeugen.

Vorteilhaft ist weiterhin die Vorrichtung mit mindestens einem ersten Modul und mindestens einem zweiten Modul, mit jeweils mindestens einem Induktor, wobei eines der Module oberhalb und eines der Module unterhalb der Induktionsspule angeordnet ist.

Außerdem vorteilhaft ist es, wenn die einzelnen Module der Vorrichtung in Reihe oder parallel durchströmbar sind.

### Kurze Beschreibung der Zeichnungen

Im Folgenden wird die Erfindung anhand eines Ausführungsbeispiels unter Bezugnahme auf die Zeichnung detailliert erläutert. In der Zeichnung zeigen:
- Fig. 1: zeigt einen schematischen Aufbau einer Induktionsheizung,
- Fig. 2: zeigt eine Explosionsdarstellung einer erfindungsgemäßen Induktionsheizung,
- Fig. 3: zeigt einen Schnitt durch die Mitteleben eines der Module,
- Fig. 4: zeigt einen Schnitt durch eines der Module entsprechend der Schnittebene A-A aus Figur 3, und
- Fig. 5: zeigt einen weiteren Schnitt durch eines der Module entsprechend der Schnittebene B-B aus Figur 3.

### Bevorzugte Ausführung der Erfindung

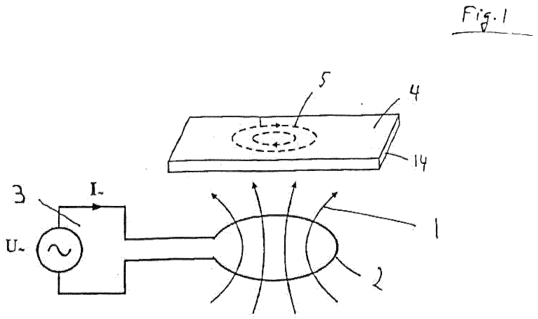

Figur 1 zeigt den prinzipiellen Aufbau einer Induktionsheizung. Dargestellt ist die Induktionsspule 2, welche an einen Stromkreis 3 angeschlossen ist, welcher mit Wechselspannung betrieben wird. Durch die Wechselspannung im Stromkreis 3 wird in der Induktionsspule 2 ein Magnetfeld 1 erzeugt. Auf Grund des im Stromkreis 3 anliegenden Wechselstroms ist das Magnetfeld 1 ein Wechselmagnetfeld, welches mit der Frequenz des Wechselstroms seine magnetische Ausrichtung ändert.

In das Magnetfeld 1 ist ein Heizkörper 4 eingebracht, welcher aus einem elektrisch leitenden Material 6 besteht. In den Heizkörper 4 werden auf Grund des Magnetfeldes 1 Wirbelströme 5 induziert. Da die Wirbelströme 5 gegen den spezifischen Widerstand des Heizkörpers 4 wirken, entsteht Wärme im Heizkörper 4.

Hieraus ergibt sich, dass das Material 6 aus dem der Heizkörper 4 besteht, einen gewissen spezifischen inneren Widerstand aufweisen muss, um eine wirksame Erwärmung des Heizkörpers 4 zu ermöglichen. Je geringer der innere Widerstand des Materials 6 ist, umso geringer wird der Erwärmungseffekt ausfallen.

Der Heizkörper 4 muss in einem solchen Abstand zur Induktionsspule 2 angeordnet sein, dass er sich noch innerhalb des sich bildenden Magnetfeldes befindet. Zwischen dem Heizkörper 4 und der Induktionsspule 2 können andere Elemente aus elektrisch nicht leitenden Materialien angeordnet sein.

Nach diesem einfachen Prinzip sind Induktionsheizungen aufgebaut. Der Heizkörper 4 kann in alternativen Ausführungsformen auch andere Außenmaße und -formen aufweisen. So ist prinzipiell jede regelmäßige oder auch unregelmäßige Anordnung des Materials 6 des Heizkörpers 4 denkbar.

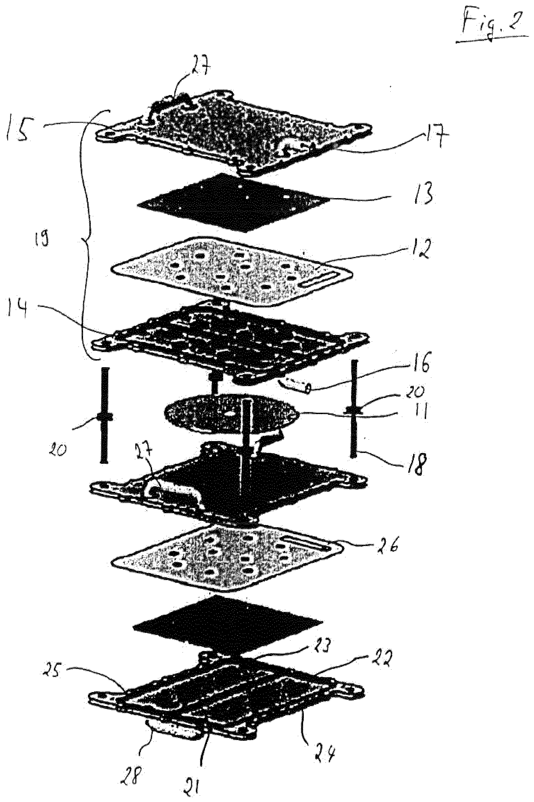

Figur 2 zeigt eine weitere Ausführungsform einer Induktionsheizung. Dargestellt ist eine Induktionsspule 11. Der Schwingkreis an den sie analog zu dem in Figur 1 bereits gezeigten Aufbau zum Betrieb angeschlossen ist, ist hier aus Gründen der Übersichtlichkeit nicht dargestellt.

Die Induktionsspule 11 ist zwischen zwei baugleichen Modulen 19 positioniert. Die Module 19 werden im Wesentlichen aus einem Gehäuseoberteil 15, einem Gehäuseunterteil 14 und einem oder mehreren Induktoren 12 gebildet. Abhängig vom Einsatzzweck kann zusätzlich im Modul 19 noch eine Turbulenzeinlage 13 angeordnet sein.

Oberhalb der Spule 11 ist ein Gehäuseunterteil 14 angeordnet, welches einen Zu- bzw. Ablaufstutzen 16 für ein Fluid aufweist. In dem Gehäuseunterteil 14 ist ein Induktor 12 eingelegt, welcher durch die von der Spule 11 induzierten Ströme erwärmt wird. Auf den Induktor 12 folgt eine Turbulenzeinlage 13, die dazu dient, das Fluid, welches den Induktor 12 umströmt zu verwirbeln, um so den Wärmeübergang vom Induktor 12 auf das ihn umströmende Fluid zu verbessern.

In weiteren erfindungsgemäßen Ausführungsformen ist es vorteilhaft, wenn der Induktor 12 selbst so ausgebildet ist, dass er die Funktion der Turbulenzeinlage 13 übernimmt. Auf diese Weise lässt sich pro Modul 19 ein Bauteil einsparen. Damit die Funktion der Turbulenzeinlage vom Induktor übernommen werden kann, ist es notwendig, die Oberflächenstruktur des Induktors entsprechend zu gestalten. Dies kann erreicht werden durch den Einsatz verschiedener Umformungsverfahren, wie etwa dem Prägen oder dem Einbringen von Sicken in den Induktor. Mit diesen beiden Verfahren lassen sich nahezu beliebige Oberflächenstrukturen an dem Induktor herstellen.

Weitere erfindungsgemäße Ausformungen lassen sich etwa durch eine gezielte Urformung erreichen. Auch lassen sich Oberflächenstrukturen durch spanende Verfahren erzeugen.

Das Modul 19 wird durch ein Gehäuseoberteil 15 abgeschlossen, welches einen Zu- bzw. Ablaufstutzen 17 für die Zu- bzw. Abführung eines Fluids aufweist. Das Gehäuseunterteil 14 und das Gehäuseoberteil 15 sind in der hier gezeigten Ausführung identisch, was die Teilevielfalt weiter reduziert,

In Figur 2 ist die Anordnung zweier Module 19, eines jeweils oberhalb und eines unterhalb der Induktionsspule 11 dargestellt. Die Module 19 sind hierbei mit Verbindungselementen 18 an vier Stellen verbunden. Die Verbindungselemente 18 weisen einen Platzhalter 20 auf, der zwischen den Modulen 19 einen Freiraum für die Induktionsspule 11 schafft.

Im Betrieb strömt ein Fluid entweder durch den Stutzen 16 in das Gehäuseunterteil 14 oder durch den Stutzen 17 in das Gehäuseoberteil 15 ein. Dies hängt nur von der gewählten Durchströmungsrichtung ab und ist prinzipiell in beide Richtungen denkbar. Das Fluid verteilt sich dann im Modul 19 und umströmt damit die Turbulenzeinlage 13 und den Induktor 12, oder im Falle eines kombinierten Bauteils aus Induktor 12 und Turbulenzeinlage 13 nur dieses eine Bauteil.

Das nun erwärmte Fluid strömt durch den jeweils anderen Stutzen 16, 17 wieder aus dem Modul 19 aus.

Auf diese Weise besteht kein direkter Kontakt zwischen der elektrisch durchflossenen Spule 11 und dem mit dem Fluid in Kontakt stehenden Induktor 12. Somit kann auf eine zusätzliche Isolation verzichtet werden. Die Effizienz des Wärmeübergangs kann so gesteigert werden.

Die genaue Ausgestaltung des Moduls 19, sowie die Geometrie des Induktors 12 bzw. der Turbulenzeinlage 13 hängen stark vom zu Grunde gelegten Einsatzzweck ab. Prinzipiell ist jede beliebige Form des Induktors 12 denkbar. Der Induktor 12 kann ebenso Erhöhungen und Vertiefungen aufweisen, oder Leitfinnen oder andere Elemente, die zur Verwirbelung der Fluidströmung beitragen.

In alternativen Ausführungsformen ist es auch denkbar mehrere Induktoren innerhalb eines Moduls anzuordnen. So könnten durch das Modul mehrere abgeschlossene Kanäle gebildet werden, welche mit dem Fluid durchströmt werden, welche jeweils einen Induktor aufweisen. Ebenfalls vorstellbar ist eine Stapelung mehrerer durchströmter Ebenen mit jeweils einem Induktor.

Grundsätzlich müssen der/die Induktor/en 12 so im magnetischen Feld der Spule 11 positioniert werden, dass noch genügend starke Wirbelströme in den/die Induktor/en 12 induziert werden können.

In alternativen, erfindungsgemäßen Ausführungsformen ist auch eine Anordnung von nur einem Modul im Magnetfeld der Spule denkbar, ebenso die Anordnung einer Mehrzahl von Modulen. Grundlegend zu beachten ist, dass die Induktoren, welche in den Modulen angeordnet sind, noch im Wirkungsbereich des von der Spule erzeugten Magnetfeldes angeordnet sind.

Die Formgebung des Induktors und der Induktionsspule kann in alternativen Ausführungsformen ebenfalls von der in Figur 2 gezeigten Ausführung abweichen. So kann beispielsweise als Induktor auch eine Mehrzahl von einzelnen Induktoren Verwendung finden, die untereinander zu einem elektrisch leitend miteinander verbundenen Netzwerk verschaltet sind.

Die Materialwahl des Moduls 19, sowie der den Induktor 12 umgebenden Rohre sollte in Hinsicht auf das verwendete Induktionsverfahren, sowie der sonstigen aus dem Betrieb resultierenden Anforderungen getroffen werden. Vorteilhafterweise werden hier Kunststoffe eingesetzt, da in diese keine Wirbelströme induziert werden können, wodurch unerwünschte Wechselwirkungen reduziert werden können.

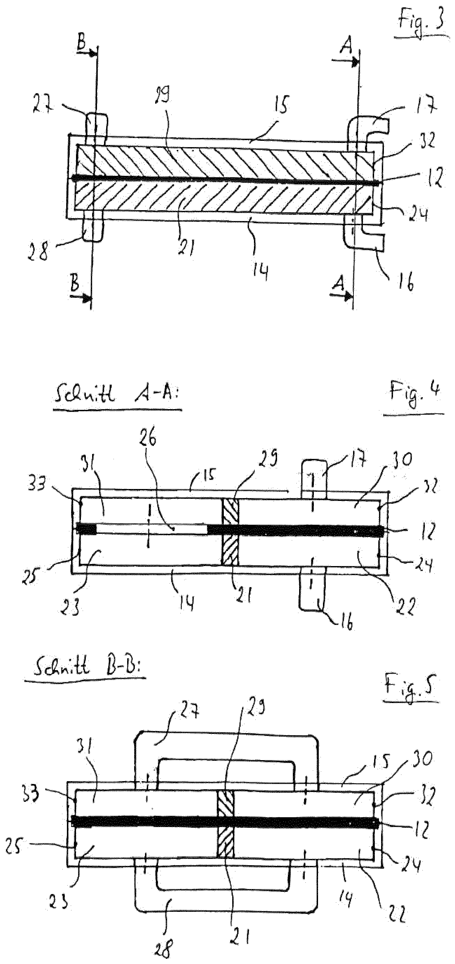

Die Figuren 3 bis 5 zeigen jeweils Schnitte durch eines der Module 19. Sie geben damit einen deutlicheren Einblick in den inneren Aufbau der Module 19.

Figur 3 zeigt hierbei einen Schnitt durch die Mittelebene eines der Module 19. Dargestellt sind die beiden Stutzen 16, 17 welche als Zu- bzw. als Ablauf nutzbar sind, je nach Durchströmungsrichtung.

Der Induktor 12 ist so zwischen dem Gehäuseoberteil 15 und dem Gehäuseunterteil 14 angeordnet, dass das Modul 19 in einen oberen und einen unteren Bereich unterteilt.

Jeweils mittig in dem Gehäuseoberteil 15 und dem Gehäuseunterteil 14 verläuft eine Trennwand 21, 29, welche in Verbindung mit dem Induktor 12 jedes der Gehäuseteile 14, 15 in einen ersten Strömungskanal 22, 30 und einen zweiten Strömungskanal 23, 31 unterteilt. Der erste Strömungskanal 22 des Gehäuseunterteils 14 steht hierbei mit dem zweiten Strömungskanal 23 des Gehäuseunterteils 14 über eine Verbindung 28 in Fluidkommunikation. Entsprechendes gilt für das Gehäuseoberteil 15, wo der erste Strömungskanal 30 über die Verbindung 27 mit dem zweiten Strömungskanal 31 in Fluidkommunikation steht.

Figur 4 zeigt einen Schnitt entsprechend der in Figur 3 gezeigten Schnittebene A-A. In der Figur ist neben den bereits in Figur 3 gezeigten und oben beschriebenen Elementen zusätzlich die Durchtrittsöffnung 26 des Induktors 12 dargestellt. Über diese Durchtrittsöffnung 26 steht der zweite Strömungskanal 31 des unteren Gehäuseteils 14 mit dem zweiten Strömungskanal 31 des oberen Gehäuseteils 15 in Fluidkommunikation.

Es ist gut zu erkennen, wie die obere Trennwand 29 und die untere Trennwand 21 mit dem Induktor 1 abschließen und so die Gehäuseteile 14, 15 in jeweils zwei Strömungskanäle 22, 23, 30, 31 unterteilen.

Der erste Strömungskanal 22 des Gehäuseunterteils 14 wird folglich durch den Induktor 12, die Wandung 24 und die Trennwand 21 gebildet. Der zweite Strömungskanal 23 des Gehäuseunterteils 14 wird durch den Induktor 12, die Wandung 25 und die Trennwand 21 gebildet. Analog wird der erste Strömungskanal 30 des Gehäuseoberteils 15 durch den Induktor 12, die Wandung 32 und die Trennwand 29 und der zweite Strömungskanal 31 des Gehäuseoberteils 15 durch den Induktor 12, die Wandung 33 und die Trennwand 29 gebildet.

Figur 5 zeigt einen Schnitt durch eines der Module 19 entsprechend der in Figur 3 gezeigten Schnittebene B-B.

Dieser Schnitt liegt im Bereich der beiden Verbindungen 27, 28 welche jeweils die ersten Strömungskanäle 22, 30 mit den zweiten Strömungskanälen 23, 31 verbindet.

Die Stutzen 16, 17 können wahlweise als Zu- oder als Ablauf genutzt werden. Dies hängt von der gewählten Durchströmungsrichtung ab. Die Durchströmungsreihenfolge eines Moduls 19 ist im Folgenden für den Fall beschrieben, dass der Stutzen 16 als Zulauf und der Stutzen 17 als Ablauf des Moduls 19 verwendet wird.

Das Fluid strömt dann durch den Stutzen 16 in den ersten Strömungskanal 22 des Gehäuseunterteils 14 ein, strömt im Folgenden durch die Verbindung 28 in den zweiten Strömungskanal 23 des Gehäuseunterteils 14, dann durch die Durchtrittsöffnung 26 in den zweiten Strömungskanal 31 des Gehäuseoberteils 15, durch die Verbindung 27 in den ersten Strömungskanal 30 des Gehäuseoberteils 15 und schließlich durch den Stutzen 17 aus dem Modul 19 aus.

## Patentansprüche

1. Vorrichtung zum elektrischen Aufheizen eines Fluids in einem elektrisch betriebenen Kraftfahrzeug, mit einem ersten Modul (19), das einen ersten Induktor (12), ein Gehäuseunterteil (14) und ein Gehäuseoberteil (15) aufweist, wobei mindestens der erste Induktor (12) mittels eines magnetischen Wechselfelds (1) erwärmbar ist, welcher innerhalb des magnetischen Wechselfeldes (1) positionierbar ist, wobei der erste Induktor (12) im Inneren des ersten Moduls (19) angeordnet ist, welches mit einem zu erwärmenden Fluid durchströmbar ist, **dadurch gekennzeichnet, dass** das Gehäuseunterteil (14) und das Gehäuseoberteil (15) im Inneren jeweils eine mittig verlaufende Trennwand (21, 29) aufweisen, welche das Gehäuseoberteil (15) bzw. das Gehäuseunterteil (14) in jeweils einen ersten Strömungskanal (22, 30) und einen zweiten Strömungskanal (23, 31) unterteilt, wobei der erste Strömungskanal (22, 30) des Gehäuseoberteils bzw. des Gehäuseunterteils (15, 14) mit einem Zu- bzw. Ablauf (16, 17) des ersten Moduls (19) in Fluidkommunikation steht und der zweite Strömungskanal (31) des Gehäuseoberteils (15) mit dem zweiten Strömungskanal (23) des Gehäuseunterteils (14) in Fluidkommunikation steht.

2. Vorrichtung nach Anspruch 1, **dadurch gekennzeichnet, dass** eine Induktionsspule (2) elektrisch in einem Schwingkreis (3) integriert ist und die Induktionsspule (2) räumlich außerhalb des ersten Moduls (19) angeordnet ist, wobei die Induktionsspule (2) das magnetische Wechselfeld erzeugt.

3. Vorrichtung nach Anspruch 1 oder 2, **dadurch gekennzeichnet, dass** der erste Induktor (12) zur Erzeugung einer turbulenten Umströmung und/oder Durchströmung Oberflächenelemente, und/oder Bohrungen, und/oder Stanzungen aufweist.

4. Vorrichtung nach einem der vorherigen Ansprüche, **dadurch gekennzeichnet, dass** der erste Induktor (12) zur Erzeugung einer turbulenten Umströmung eine durch Umformung, insbesondere durch Prägung und/oder Sickung, und/oder durch Urformung und/oder durch spanende Verformung geeignete Oberfläche aufweist.

5. Vorrichtung nach einem der vorherigen Ansprüche, **dadurch gekennzeichnet, dass** das erste Modul (19) teilbar ist.

6. Vorrichtung nach einem der vorherigen Ansprüche, **dadurch gekennzeichnet, dass** der erste Induktor (12) mit den Wandungen (24, 32) des ersten Strömungskanals (22, 30) und den Wandungen (25, 33) des zweiten Strömungskanals (23, 31) des Gehäuseoberteils (15) bzw. des Gehäuseunterteils (14) fluiddicht abschließt und das Innere des ersten Moduls in einen oberen und einen unteren Bereich unterteilt.

7. Vorrichtung nach einem der vorhergehenden Ansprüche, **dadurch gekennzeichnet, dass** der erste Induktor (12) eine Durchtrittsöffnung (26) aufweist, worüber der zweite Strömungskanal (31) des oberen Bereichs des ersten Moduls (19) mit dem zweiten Strömungskanal (23) des unteren Bereichs des ersten Moduls (19) in Fluidkommunikation steht.

8. Vorrichtung nach einem der vorherigen Ansprüche, **dadurch gekennzeichnet, dass** der erste Strömungskanal (22) des Gehäuseunterteils (14) mit dem zweiten Strömungskanal (23) des Gehäuseunterteils (14), sowie der erste Strömungskanal (30) des Gehäuseoberteils (15) mit dem zweiten Strömungskanal (31) des Gehäuseoberteils (15) über Verbindungen (27, 28) in Fluidkommunikation steht.

9. Vorrichtung nach einem der vorherigen Ansprüche, **dadurch gekennzeichnet, dass** der Strömungsweg des Fluids über einen Stutzen (16) in das Modul, in den ersten Strömungskanal (22) des Gehäuseunterteils (14), in den zweiten Strömungskanal (23) des Gehäuseunterteils (14) durch die Durchtrittsöffnung (26) des Induktors, in den zweiten Strömungskanal (31) des Gehäuseoberteils (15), in den ersten Strömungskanal (30) des Gehäuseoberteils (15) und abschließend durch einen Stutzen (17) aus dem Gehäuse heraus, oder in umgekehrter Richtung verläuft.

10. Vorrichtung nach Anspruch 1, **dadurch gekennzeichnet, dass** mit dem ersten Induktor (12) mindestens eine Turbulenzeinlage (13) in dem ersten Modul (19) angeordnet ist.

11. Vorrichtung nach Anspruch 2, mit einem zweiten Modul (19), das einen zweiten Induktor (12) aufweist, wobei das zweite Modul (19) wie das erste Modul (19) gebaut ist, **dadurch gekennzeichnet, dass** eines der Module (19) oberhalb und eines der Module (19) unterhalb der Induktionsspule (2) angeordnet ist.

12. Vorrichtung nach Anspruch 11, **dadurch gekennzeichnet, dass** die einzelnen Module (19) in Reihe oder parallel durchströmbar sind.

## Claims

1. A device for electrically heating a fluid in an electrically operated motor vehicle with a first module (19) which has a first inductor (12), a bottom housing part (14) and a top housing part (15), wherein at least the first inductor (12) can be heated by means of an alternating magnetic field (1), wherein the inductor can be positioned within the alternating magnetic field (1), wherein the first inductor (12) is arranged in the interior of the first module (19) through which a fluid to be heated can flow, **characterised in that** the bottom housing part (14) and the top housing part (15) in the interior each have a partition wall (21, 29) which runs centrally and divides the top housing part (15) or the bottom housing part (14) in each case into a first flow channel (22, 30) and a second flow channel (23, 31), wherein the first flow channel (22, 30) of the top housing part or of the bottom housing part (15, 14) is in fluid communication with an inlet or outlet (16, 17) of the first module (19) and the second flow channel (31) of the top housing part (15) is in fluid communication with the second flow channel (23) of the bottom housing part (14).

2. The device according to claim 1, **characterised in that** an induction coil (2) is electrically integrated into an oscillating circuit (3) and the induction coil (2) is arranged spatially outside the first module (19), wherein the induction coil (2) generates the alternating magnetic field.

3. The device according to claim 1 or 2, **characterised in that** the first inductor (12) has surface elements and/or holes and/or punches to generate a turbulent surround-flow and/or through-flow.

4. The device according to one of the preceding claims, **characterised in that** the first inductor (12) has a suitably shaped surface, particularly by embossing and/or beading, and/or by primary shaping and/or by cutting deformation, to generate a turbulent surround-flow.

5. The device according to one of the preceding claims, **characterised in that** the first module (19) can be divided.

6. The device according to one of the preceding claims, **characterised in that** the first inductor (12) seals fluid-tight with the walls (24, 32) of the first flow channel (22, 30) and the walls (25, 33) of the second flow channel (23, 31) of the top housing part (15) or of the bottom housing part (14) and divides the interior of the first module into a top and a bottom region.

7. The device according to one of the preceding claims, **characterised in that** the first inductor (12) has an opening (26) through which the second flow channel (31) of the top region of the first module is in fluid communication with the second flow channel (23) of the bottom region of the first module.

8. The device according to one of the preceding claims, **characterised in that** the first flow channel (22) of the bottom housing part (14) is in fluid communication with the second flow channel (23) of the bottom housing part (14) and the first flow channel (30) of the top housing part (15) with the second flow channel (31) of the top housing part (15) via connections (27, 28).

9. The device according to one of the preceding claims, **characterised in that** the flow path of the fluid runs via a connector (16) into the module, into the first flow channel (22) of the bottom housing part (14), into the second flow channel (23) of the bottom housing part (14) through the opening (26) of the inductor, into the second flow channel (31) of the top housing part (15), into the first flow channel (30) of the top housing part (15) and finally through a connector (17) out of the housing or in the opposite direction.

10. The device according to claim 1, **characterised in that** at least one turbulence insert (13) is arranged in the first module (19) with the first inductor (12) .

11. The device according to claim 2, with a second module (19) which has a second inductor (12), wherein the second module (19) is built like the first module (19), **characterised in that** one of the modules (19) is arranged above and one of the modules (19) below the induction coil (2).

12. The device according to claim 11, **characterised in that** the flow passes through the individual modules (19) in series or parallel.

## Revendications

1. Dispositif de mise à température d'un fluide par chauffage électrique dans un véhicule automobile commandé électriquement, ledit dispositif comprenant un premier module (19) qui présente un premier inducteur (12), une partie inférieure de carter (14) et une partie supérieure de carter (15), où au moins le premier inducteur (12) peut être chauffé au moyen d'un champ magnétique alternatif (1), lequel premier inducteur peut être positionné à l'intérieur du champ magnétique alternatif (1), où le premier inducteur (12) est disposé à l'intérieur du premier module (19) qui peut être traversé par un fluide à chauffer, **caractérisé en ce que** la partie inférieure de carter (14) et la partie supérieure de carter (15) présentent, à l'intérieur, une paroi de séparation (21, 29) s'étendant à chaque fois au milieu, laquelle paroi de séparation subdivise la partie supérieure de carter (15) ou la partie inférieure de carter (14) à chaque fois en un premier conduit d'écoulement (22, 30) et en un deuxième conduit d'écoulement (23, 31), ou le premier conduit d'écoulement (22, 30) de la partie supérieure de carter ou de la partie inférieure de carter (15, 14) est en communication fluidique avec une arrivée ou une évacuation (16, 17) du premier module (19), et le deuxième conduit d'écoulement (31) de la partie supérieure de carter (15) est en communication fluidique avec le deuxième conduit d'écoulement (23) de la partie inférieure de carter (14).

2. Dispositif selon la revendication 1, **caractérisé en ce qu'**une bobine d'induction (2) est intégrée électriquement dans un circuit oscillant (3), et la bobine d'induction (2) est disposée physiquement à l'extérieur du premier module (19), où la bobine d'induction (2) produit le champ magnétique alternatif.

3. Dispositif selon la revendication 1 ou 2, **caractérisé en ce que** le premier inducteur (12), pour la production d'un écoulement de contournement turbulent et / ou d'un flux traversant, présente des éléments de surface et / ou des perçages et / ou des découpes.

4. Dispositif selon l'une quelconque des revendications précédentes, **caractérisé en ce que** le premier inducteur (12), pour la production d'un écoulement de contournement turbulent, présente une surface appropriée, ladite surface étant obtenue par formage, en particulier par gaufrage et / ou par moulurage, et / ou en procédant par façonnage initial et / ou par déformation réalisée par enlèvement de matière.

5. Dispositif selon l'une quelconque des revendications précédentes, **caractérisé en ce que** le premier module (19) est séparable.

6. Dispositif selon l'une quelconque des revendications précédentes, **caractérisé en ce que** le premier inducteur (12), grâce aux parois (24, 32) du premier conduit d'écoulement (22, 30) et aux parois (25, 33) du deuxième conduit d'écoulement (23, 31) de la partie supérieure de carter (15) ou de la partie inférieure de carter (14), se termine en étant étanche au fluide et subdivise l'intérieur du premier module en une zone supérieure et en une zone inférieure.

7. Dispositif selon l'une quelconque des revendications précédentes, **caractérisé en ce que** le premier inducteur (12) présente une ouverture de passage (26) par laquelle le deuxième conduit d'écoulement (31) de la zone supérieure du premier module est en communication fluidique avec le deuxième conduit d'écoulement (23) de la zone inférieure du premier module.

8. Dispositif selon l'une quelconque des revendications précédentes, **caractérisé en ce que** le premier conduit d'écoulement (22) de la partie inférieure de carter (14) est en communication fluidique avec le deuxième conduit d'écoulement (23) de la partie inférieure de carter (14), de même que le premier conduit d'écoulement (30) de la partie supérieure de carter (15) est en communication fluidique avec le deuxième conduit d'écoulement (31) de la partie supérieure de carter (15), par des liaisons (27, 28).

9. Dispositif selon l'une quelconque des revendications précédentes, **caractérisé en ce que** la trajectoire d'écoulement du fluide s'étend dans le module en passant par une tubulure (16), s'étend dans le premier conduit d'écoulement (22) de la partie inférieure de carter (14), s'étend dans le deuxième conduit d'écoulement (23) de la partie inférieure de carter (14) en passant par l'ouverture de passage (26) de l'inducteur, s'étend dans le deuxième conduit d'écoulement (31) de la partie supérieure de carter (15), s'étend dans le premier conduit d'écoulement (30) de la partie supérieure de carter (15) et, enfin, sort du carter en passant par une tubulure (17), ou bien ladite trajectoire d'écoulement s'étend en sens inverse.

10. Dispositif selon la revendication 1, **caractérisé en ce qu'**au moins une plaque rapportée générant des turbulences (13), associée au premier inducteur (12), est disposée dans le premier module (19).

11. Dispositif selon la revendication 2, comprenant un deuxième module (19) qui présente un deuxième inducteur (12), où le deuxième module (19) est conçu comme le premier module (19), **caractérisé en ce que** l'un des modules (19) est disposé au-dessus de la bobine d'induction (2), l'un des modules (19) étant disposé au-dessous de ladite bobine d'induction.

12. Dispositif selon la revendication 11, **caractérisé en ce que** les différents modules (19) peuvent être traversés en série ou en parallèle.
